# EUROPEAN PATENT APPLICATION

(11) **EP 3 434 160 A1**
(43) Date of publication of application: **30.01.2019**
(21) Application number: 17880213.8
(22) Date of filing: 11.12.2017
(51) Int. Cl.: A47J 37/04, A21B 5/00, A21C 15/00, A21D 13/10, A23G 3/00, A23G 3/34, A23G 3/50

(54) **PRODUCTION DEVICE FOR FILLED SANDWICH PANCAKES**

(30) Priority: 13.12.2016 JP 2016240948
(71) Applicant: Masdac Co., Ltd., Saitama 359-1147 (JP)
(72) Inventor: MASUDA, Fumiharu, Tokorozawa-shi Saitama 359-1147 (JP); ENDO, Toyohiko, Tokorozawa-shi Saitama 359-1147 (JP); MORIYA, Yosuke, Tokorozawa-shi Saitama 359-1147 (JP)
(74) Representative: Geskes, Christoph
(86) International application number: PCT/JP2017/044422
(87) International publication number: WO 2018/110514

(57) **Abstract**

Provided is a filled-sandwich-pancake maker that has improved production capacity, and that is equipped with: a baking device in which multiple griddle plates are linked to form a griddle-plate conveyor that orbits above and below a burner; a batter depositor that dispenses batter for forming pancakes in a line on the griddle plates; a flipping device that flips the pancakes such that their browned surface faces up; a blower that blows air to release pancakes from the griddle plates; a normal-orientation/upside-down-orientation switching device that alternates, for each row, between a normal orientation in which the pancakes are conveyed with their browned surface facing down, and an upside-down orientation in which the pancakes are conveyed with their browned surface facing up; a bean-paste depositor that deposits bean paste upon pancakes whose browned surface are facing down; a branding device that applies a brand onto the pancakes; and an aligning/sealing device that suctions and lifts pancakes whose browned surface are facing up, moves said pancakes in a circular arc, lays those pancakes upon other pancakes on which bean paste has been deposited, sandwiches those pancakes between a top die and a bottom die, and presses the layered pancakes together.

## Description

### [Technical Field]

The present invention relates to a machine for making filled-sandwich pancakes, especially a machine whose capability is significantly better than that of conventional ones.

### [Background Art]

A machine for making filled-sandwich pancakes has been known as a bean-jam-pancake maker. As shown in Patent Document 1, one type of maker of filled-sandwich pancakes makes bean-jam-sandwich pancakes as follows:
1. dough from a dough-filling machine (1) is deposited on a metal plate (20);
2. the dough on the plate is heated by a burner (2);
3. the resulting baked pancake (34) is covered with bean jam (30);
4. another baked pancake (34) is overlaid on the first baked pancake (34), on which bean jam (30) has been deposited;
5. the two baked pancakes are pressed together along their respective peripheries so that the bean jam (30) cannot be seen from outside of what is now a bean-jam-filled pancake sandwich.

The prior-art machines for producing filled-sandwich pancakes have needed to be improved. For example, Fig. 10(A) shows the flow of four baked pancakes in the bean-jam-pancake maker of Patent Document 1. Although there are four pancakes in both of two parallel rows when the pancakes are being baked, when those pancakes are conveyed to a turn-over/not-turn-over device (Patent Document 1, Fig. 1, No. 9), the baked pancakes in the right-side row are conveyed as they are (not flipped, baked-side up), and those in the left-side row have been flipped (baked-side down). Then, a transposing device (Patent Document 1, Fig. 1, No. 14) moves the two baked pancakes in the left-half row to the right row, and alternately conveys two baked pancakes whose baked sides are up and two baked pancakes whose baked sides are down. Thus, the number of the baked pancakes in a row is reduced by one-half, and hence the production capacity (number of products per time unit) of the bean-jam-pancake maker of Patent Document 1 is lower than the production capability of a maker that does not reduce the number of the baked pancakes in a row, assuming that the time for processing a row of baked pancakes is the same for both pancake makers. Although the bean-jam-pancake maker of Patent Document 1 might be advantageous in downsizing the pancake maker, that device's production capability needs improvement regarding its production capability.

The bean-jam-pancake maker of Patent Document 1 includes: (a) a device for overlaying the baked pancakes (Patent Document 1, Fig. 1, No. 14), and (b) an pancake-periphery sealing device (Patent Document 1, Fig. 1, No. 15), and these devices work in two steps. That is, the overlaying device uses suction to pull up the baked pancakes with their baked sides up, and then, when the immediately following baked pancakes come just under the overlaying device, it lowers the baked pancakes so as to overlay the baked pancakes on the immediately following baked pancakes, on which bean jam is put. The pancake-periphery sealer, which has an upper mold and a lower mold, vertically presses the peripheries of the baked pancakes that have come just under it, so that the bean jam cannot be seen from the outside of the pancakes. Therefore, if overlaying and end-sealing are done at the same time in one step, both the manufacturing process and the manufacturing line are shortened, and the capability of the machine is improved.

A cleaning device (Patent Document 1, Fig. 1, No. 7) that includes a long brush to clean the baking plate is provided in the bean-jam-pancake maker of Patent Document 1. The baked pancakes are unstuck from the baking plate by air blown from a nozzle. However, in very rare cases the pancakes cannot be unstuck. In such cases, the brush becomes very dirty, and the cleaning and maintenance of the brush are troublesome. Therefore, it is desirable to efficiently unstick in some other way the baked pancakes that cannot be unstuck from the baking plates than by air blowing.

### [List of Citations]

### [Patent Document]

1. Japanese Unexamined Patent Application Publication No. 2012-165870.

### [Summary of the Invention]

### [Technical Problems To Be Solved]

This invention is intended to solve the above-mentioned problems and to provide a filled sandwich pancake maker that has improved production capability.

### [Solution to the Problems]

The above-specified problems are solved by the filled-sandwich-pancake maker of this invention, with said pancake maker comprising:
a baking portion in which multiple griddle plates are linked as a griddle-plate conveyor that orbits above and below a burner;
a batter depositor that deposits batter on pancakes that are in a row on the griddle plates;
a flipping device that flips each pancakes such that the browned surface of the pancake faces up;
a blower that blows air from a nozzle to the surface of the griddle plate to unstick each baked pancake from the griddle plate;
a normal-orientation/upside-down-orientation switching device that for each row alternates between a normal orientation of the pancakes on the griddle plates, in which the pancakes are conveyed with their browned surface facing down, and an upside-down orientation, in which the pancakes are conveyed with their browned surface facing up;
a bean-paste depositor that deposits bean paste on pancakes whose browned surfaces are facing down;
a branding device that presses a brand onto each pancake; and
an aligning/sealing device that (1) suctions and lifts pancakes whose browned surfaces are facing up, moves said pancakes in a circular arc, (2) lays said pancakes on top of pancakes on which bean paste has been deposited, (3) places the pancakes between a top die and a bottom die and then presses the dies toward each other, thereby joining the pancakes together as a sandwich, and (4) seals the peripheries of the two pancakes.

The normal-orientation/upside-down-orientation-switching device includes multiple rollers provided at the downward-slopping conveyor's output end. When the pancakes are in the normal-orientation, the rollers toss the baked pancakes while the rollers rotate at a first speed. When the upside-down-orientation, the rollers flip the baked pancakes while the rollers rotate at a second speed.

The filled-sandwich-pancake maker includes - for removing from the griddle plate a baked pancake that cannot be unstuck by the blower - a device that includes a wire that traverses the griddle-plates conveyor and a tray into which are put the unstuck pancakes.

The aligning/sealing device includes a detaching rod that protrudes downward from the top die.

### [Advantageous Effects of the Invention]

The filled-sandwich-pancake maker of this invention makes it possible: (1) to move to the delivery conveyor pancakes alternately in a normal orientation in a row and in an upside-down orientation in the next row, and so on, whereby this invention has improved production capability compared to the prior-art bean-jam-pancake maker, because this invention's normal-orientation/upside-down-orientation-switching device does not reduce the number of pancakes in a row, and (2) to reduce the prior-art's two steps of aligning and sealing to just one step, because the aligning/sealing device of this invention both aligns and seals the pancakes, whereby the production time is reduced.

The normal-orientation/upside-down-orientation switching device includes multiple rollers, and when - to move the baked pancakes forward - the rollers toss the baked pancakes in their normal orientation (browned surface facing down), the rollers rotate at a first speed, and when the rollers flip the baked pancakes in an upside-down orientation (browned surface facing up), the rollers rotate at a second speed that is slower than the first speed. Therefore, the baked pancakes in their normal orientation and those in an upside-down orientation come in alternate rows. Thus, because the baked pancakes are flipped by changing the speed of the rollers, the baked pancakes are not deformed or damaged during that action.

Because a wire scraper is provided at the lower part of the pancake baker, any baked pancake that cannot be unstuck from the griddle plate by the blower is unstuck properly, by the wire scraper. Thus, this filled-sandwich-pancake maker provides improved cleaning capability, and it eliminates the need for a cleaning device that includes a brush, which is difficult to clean. Small pieces of baked batter that stick to the griddle plate and cannot be removed by the wire scraper can be removed by an oil-applying device, whereby overall maintenance becomes easy.

Because there is provided in the top die a detaching rod that protrudes downwardly when the top die and the bottom die are detached from each other, the baked and sealed pancakes are easily dropped from the top die onto a rope conveyor that consists of multiple ropes, without sticking to the top die.

### [Brief Descriptions of the Drawings]

[Fig. 1] This figure is a perspective view of the filled-sandwich-pancake maker of the present invention.
[Fig. 2] This figure shows the main improved parts depicted in Fig. 1, where (A) shows the wire scraper, (B) shows the normal-orientation/upside-down-orientation switching device, and (C) shows the aligning/sealing device.
[Fig. 3] This figure shows the operation of the normal-orientation/ upside-down-orientation switching device (the first of two figures).
[Fig. 4] This figure shows the operation of the normal-orientation/upside-down-orientation switching device (the second of two figures).
[Fig. 5] This figure is a perspective view of the wire scraper.
[Fig. 6] This figure shows the operation of the wire scraper.
[Fig. 7] This figure is a perspective view of the aligning/sealing device.
[Fig. 8] This figure shows the operation of the aligning/sealing device.
[Fig. 9] This figure shows different states of the operation of the aligning/sealing device.
[Fig. 10] This figure shows the operation of the flow of baked pancakes in a filled-sandwich-pancake maker, where (A) shows the prior art, and (B) shows this invention.

### [Description of the Embodiments]

The filled-sandwich-pancake maker according to the present invention will now be described with reference to the accompanying drawings.

### [Embodiments]

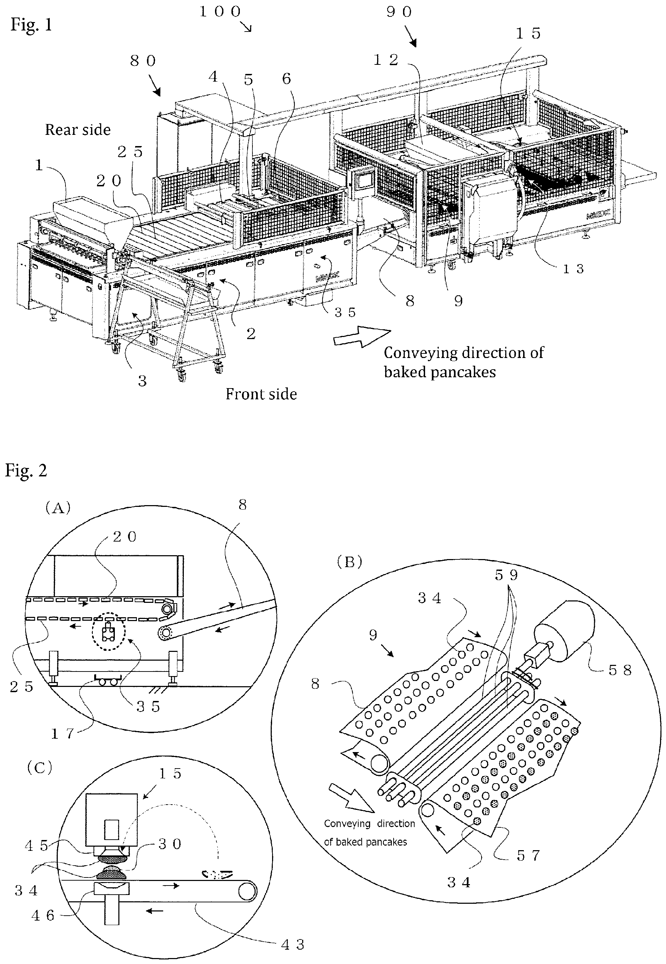

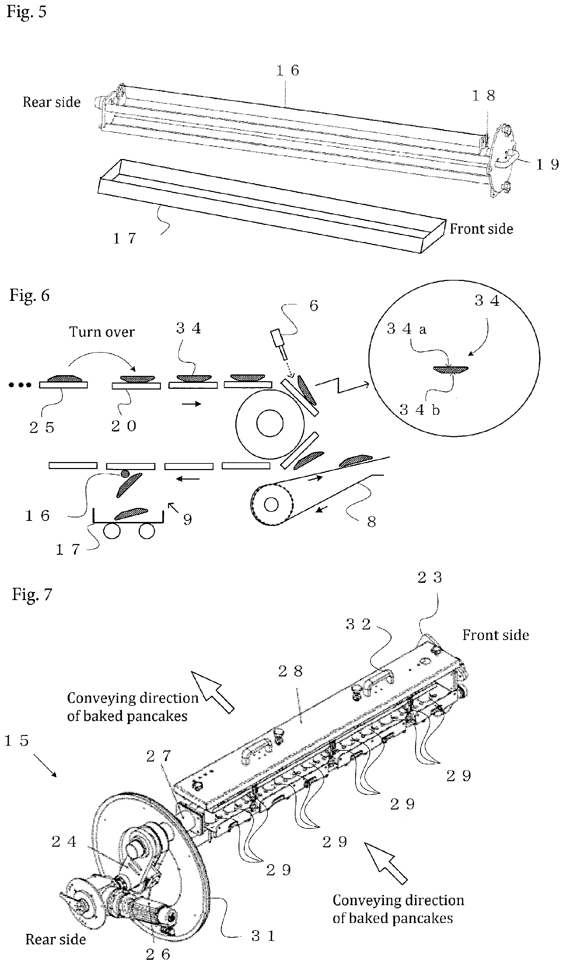

Fig. 1 is a perspective view of the filled-sandwich-pancake maker 100 of the present invention, which includes: (1) a baking device 80 for baking pancakes, and (2) a finishing device 90 that deposits bean paste on the baked pancakes and then overlays other baked pancakes on the baked pancakes on which bean jam has been deposited, and then presses together the peripheries of the two layers of baked pancakes. There is provided a downward-sloping conveyor 8 that connects the baking device 80 and the finishing device 90 and that moves pancakes from the baking device 80 to the finishing device 90. In the baking device 80, a griddle-plate conveyor 25 that includes griddle plates 20 orbits above and below a burner 2. The griddle-plate conveyor 25 may be operated intermittently, such as for 1.5 seconds and then to idle for 3.0 seconds, or may be operated continuously. A batter depositor 1 is provided above the left end of the griddle-plate conveyor 25. In this embodiment, the batter depositor 1 deposits 12 dollops of batter per row on griddle plates 20. The deposited dollops of batter on the griddle plates 20 are baked to become baked pancakes 34. The griddle plates 20 are heated to 180°C to 200°C by the burner 2. As shown in the partial-view circle in Fig. 6, the surfaces of the baked pancakes 34, baked on the griddle plates 20, are browned surfaces 34a. In Fig. 2(B), the browned surfaces are shown in black and the reverse-side surfaces are shown in white. In Fig. 1, the bold empty arrow toward the bottom of that figure shows the baked pancakes 34 being conveyed from left to right.

An upper fire burner 4 lightly bakes the upper surfaces of the baked pancakes 34. The spatula-shaped portion of a flipping device 5 scoops the baked pancakes 34 and flips the baked pancakes by about 180°, whereby the browned surfaces of the baked pancake 34 face upward. The baked pancakes 34 that have been flipped and moved past the flipping device 5 are unstuck from the griddle plates 20 by air blown from a nozzle of a blower 6, then are flipped and blown down onto the downward-sloping conveyor 8. The browned surfaces of the baked pancakes 34 face down on the downward-sloping conveyor 8. The griddle plates 20 are then moved back to the batter depositor 1. A wire scraper 35, includes wire and is provided in the direction orthogonal to the conveying direction, unsticks the baked pancakes that are stuck on the surface of the griddle plates 20. The oil-applying device 3 includes a rail provided along the longitudinal direction of the griddle plate 20. A buff (oilskin) moves on the rail and, by wiping movements, applies oil on the surface of each griddle plate 20. Oil perfused to the buff is provided from an oil-feeding pipe.

The baked pancakes 34 are conveyed from the downward-sloping conveyor 8 to the finishing device 90, initially being conveyed to the switching device 9. The normal-orientation/upside-down-orientation switching device 9 alternates, for each row, between a normal orientation, in which the pancakes are conveyed with their browned surface facing down, and an upside-down orientation, in which the pancakes are conveyed with their browned surface facing up. The bean-paste depositor 12 deposits bean paste on every second row of baked pancakes 34 whose browned surface faces down. The branding device 13 presses a brand onto the baked pancakes whose browned surface faces up.

An aligning/sealing device 15 consists of a top die and a bottom die. The top die functions to pull up the baked pancakes by suction. The aligning/sealing device 15 does the following: (1) suctions and lifts pancakes whose browned surface face up, moving said pancakes in a circular arc, (2) lays those pancakes on pancakes on which bean paste has been deposited, (3) sandwiches the pancakes between a top die and a bottom die, and (4) presses together the peripheries of the layered pancakes. An aligning device (not shown in the drawings) that aligns the baked pancakes 34 in the direction perpendicular to the conveying direction is provided before the bean-paste depositor 12, the branding device 13, and the aligning/sealing device 15.

Fig. 2 shows the main parts in Fig. 1 that have been improved. Fig. 2(A) shows the wire scraper 35, Fig. 2(B) shows the normal-orientation/upside-down-orientation switching device 9, and Fig. 2(C) shows the aligning/sealing device 15. The wire scraper 35 in Fig. 2(A) is provided underneath the griddle-plate conveyor 25 past the place where the direction of movement of the griddle plates 20 of the griddle-plates conveyor 25 has reversed so as to return the griddle plates 20 to the position at which batter is placed on them, and by scraping releases the baked pancake that cannot be unstuck from the griddle plate by the blower.

The normal-orientation/upside-down-orientation switching device 9 in Fig. 2(B) consists of three rollers provided between the conveying-out end of the downward-sloping conveyor 8 and a horizontal delivery conveyor 57 that is provided lower than the downward-sloping conveyor 8. The rollers 59 are rotated by a motor 58, and when the rollers convey the baked pancakes 34 in the normal orientation, the rollers rotate at a first speed that is enough to toss the baked pancakes 34, and when the rollers convey the baked pancakes 34 in the upside-down orientation, the rollers rotate at the second speed, which is slower than the first speed, to forwardly flip the baked pancakes. The normal-orientation/upside-down-orientation switching device alternates, for each row, between the normal orientation, in which the pancakes are conveyed with their browned surface facing down, and the upside-down orientation, in which the pancakes are conveyed with their browned surface facing up.

In the aligning/sealing device 15 in Fig. 2(C), the top die 45 suctions and lifts the pancakes 34 whose browned surfaces face up, moves said pancakes in a circular arc, and then lays those pancakes on pancakes 34 on which bean paste 30 has been deposited. The aligning/sealing device 15 then sandwiches the pancakes between the top die 45 and a bottom die 46, presses the two layers of pancakes 34 together, and seals the peripheries of the two pancakes 34. The bottom die 46 is provided below a rope conveyor 43, is divided into multiple segments, and rises through and above the rope conveyor 43 when a top die and a bottom die sandwich the pancakes.

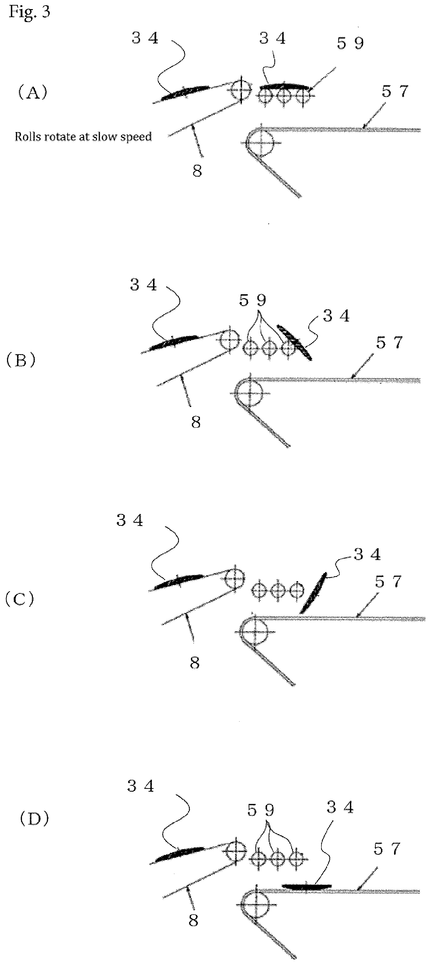

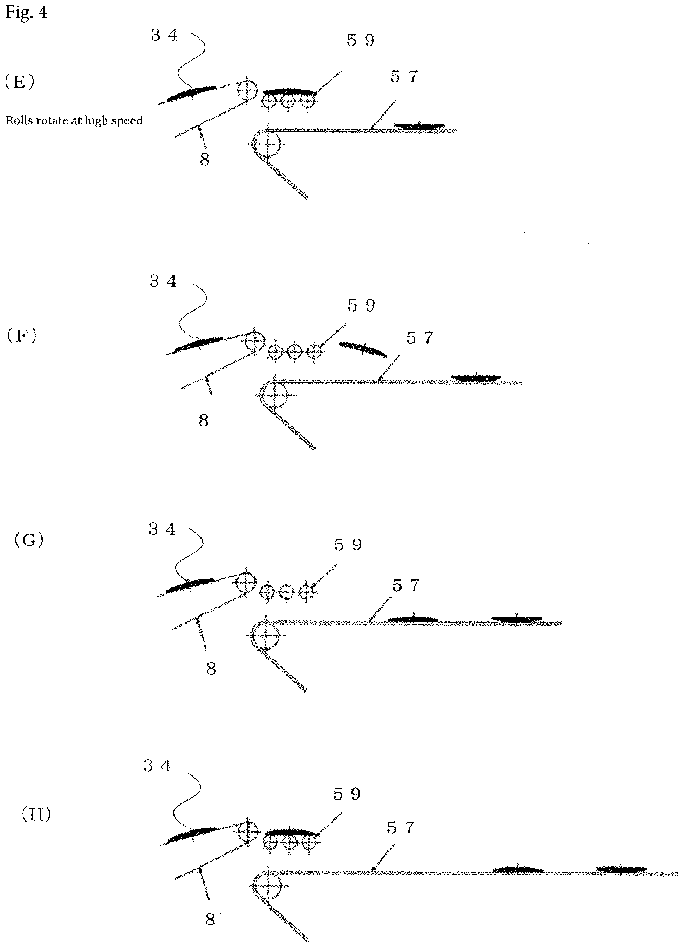

Fig. 3 and Fig. 4 (respectively, the first and second of two figures that) show the operation of the normal-orientation/upside-down-orientation switching device 9. Fig. 3(A) to Fig. 3(D) show the baked pancakes 34 in the upside-down orientation. If the front parts of the baked pancakes are conveyed off the rollers and bend down by their own weight, then the baked pancakes are pushed at their rear ends and flipped. In this case, the rollers 59 rotate at the second speed (low speed), and the baked pancakes 34 are flipped and fall onto the delivery conveyor 57. Fig. 4(E) to Fig. 4(H) show the baked pancakes 34 in the normal orientation, with the rollers 59 rotating at the first speed (higher speed) that is high enough to flip the baked pancakes 34, which fall onto the delivery conveyor 57 with their browned surfaces facing down. The first speed is high enough so that the rollers flip the baked pancakes 34, and the second speed is lower than the first speed.

Fig. 5 is a perspective view of the wire scraper 35. A wire 16 that covers the longitudinal length of the griddle plate is tightened at the upper portion of the wire scraper 35. A tray 17 is provided under the wire scraper 35 to receive the baked pancakes that have been released from the griddle plates 20. A wire fastener 18 can adjust the tension of the wire 16. The wire scraper 35 can be pulled out from the conveyor line by a handle 19.

Fig. 6 shows the operation of the wire scraper 35 (not shown, only the wire 16 is shown). As shown in the partial-view circle in Fig. 6, the browned surface 34a is the outer surface of the baked pancakes 34, and bean paste is put on the inner surface 34b. Each baked pancake 34 is flipped by a flipping device 5 so that the pancake's browned surface then faces up, and the pancake 34 is then conveyed to where the griddle-plates conveyor turns around. The baked pancakes 34 are released from the griddle plates 20 by air blown from a nozzle of a blower, and the released pancakes are blown down onto a downward-sloping conveyor. Any baked pancake(s) 34 that cannot be unstuck from the griddle plates 20 by the blower are scraped from the griddle plates 20 by the wire 16 of the wire scraper 35 and are discharged into a tray 17. As one example of possible blower arrangements, two or three air nozzles are provided for a baked pancake 34. However, even if multiple air-nozzles are provided for a baked pancake 34, on rare occasions an unstuck baked pancake 34 might remain on a griddle plate 20.

Fig. 7 is a perspective view of the aligning/sealing device 15. Fig. 7 includes top dies 45, which are located where the detaching poles 29 are inserted, although no reference numbers 45 are shown. Also not shown are the top dies' corresponding bottom dies 46. Handles 32 are provided to a body 28. In order that the inside of the device can be seen, Fig. 7 is drawn without showing the side plate of the aligning/sealing device, which includes 12 top dies 45 in the longitudinal direction of the aligning/sealing device, corresponding to 12 baked pancakes in a row. A detaching rod is provided in each of the top dies. The air in the top dies is suctioned by an air-suction tube 27, whereby a baked pancake 34 can be pulled up to the top die. The body 28 moves in a circular arc by a servomotor 26 provided at the rear of the aligning/sealing device 15. Arms 23, 24 are provided in the aligning/sealing device 15, and one end of each of the arms 23, 24 is coupled to one of the ends of the body 28, and the other end of each of the arms 23, 24 is coupled to a rotating shaft. The body 28 moves in a circular arc with all of its sides always facing the same directions. A rear cover 31 is provided to be pivotally connected to one end of the arm 24. A bottom die 46 consists of four segments, although no perspective view of a bottom die 46 is provided in Fig. 7. The bottom die 46 rises through and above the rope conveyor 43 and presses two baked pancakes 34 from their bottoms. Guide members (not shown in the drawings) are provided at four corners of the top die 45 to guide the four segments of the bottom die 46 to function as if one piece, with no space between the segments. The top die 45 presses the peripheries of the two baked pancakes 34 from the top, with the top die 45 being concave so that it does not strongly press the central parts of the two baked pancakes 34.

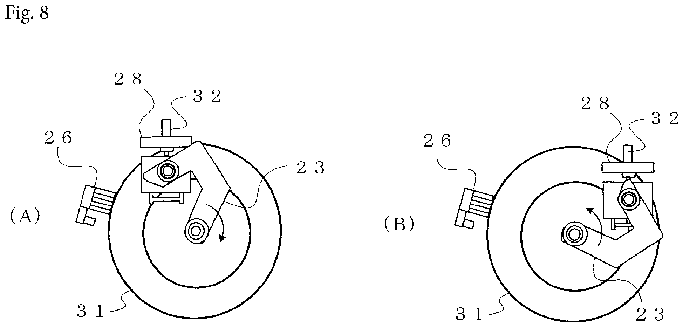

Fig. 8 shows two front views and the operation of the aligning/sealing device 15. The peripheries of the two pancakes are sealed together when the arm 23 is as shown in Fig. 8(A), and the aligning/sealing device 15 pulls up by suction the baked pancakes 34 in front in the conveying direction when the arm 23 is as shown in Fig. 8(B). Thus, the body 28 is moved by its arms in a circular arc.

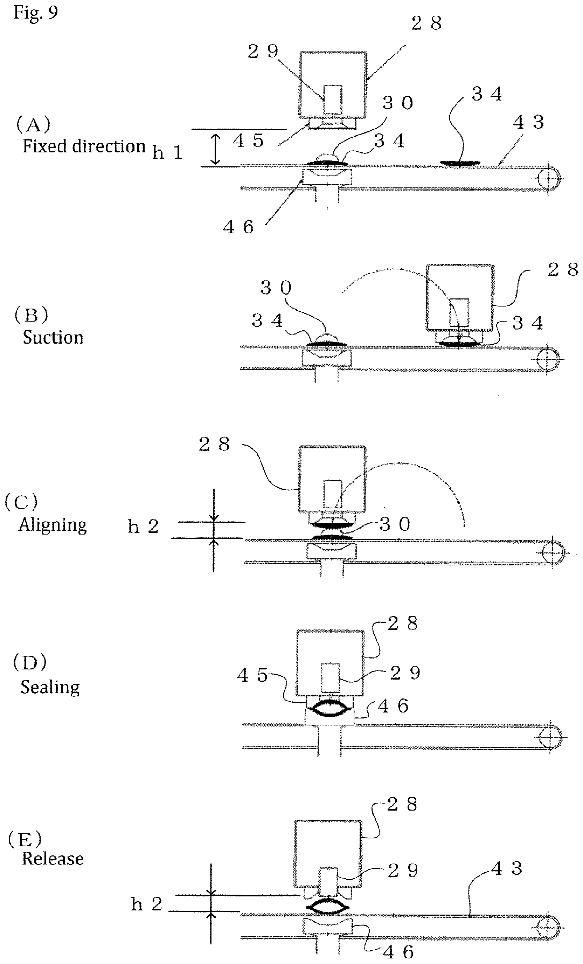

Fig. 9 shows a different view of the operation of the aligning/sealing device 15. Fig. 9(A) shows the state where the body 28 is in a fixed position at the height h1, and where a baked pancake 34 on which bean paste 30 has been deposited is just below the body 28, and where another baked pancake 34 is in front (in the conveying direction) of the baked pancake 34 on which bean paste 30 has been deposited. Fig. 9(B) shows the state of the suction process when the body 28 is moved forward in a circular arc to another baked pancake 34 and by suction lifts that other baked pancake 34. Fig. 9(C) shows the state of the aligning process when the body 28 is moved back in a circular arc to just above the baked pancake 34 on which bean paste 30 has been deposited, and stops at the height h2. Fig. 9(D) shows the state of the process of sealing together the peripheries of two pancakes when the bottom die 46 rises through and above a rope conveyor 43 and, in combination with the top die 45, sandwiches and presses together the baked pancakes 34, 34. In this sealing process, the suction of the baked pancake 34 by air stops. Fig. 9(E) shows the pancake-releasing process when the bottom die 46 comes down below the rope conveyor 43, and the baked item (sandwich pancake) is above the rope conveyor 43. As a result of the detaching rod 29 protruding downward, the sandwich pancake falls down on the rope conveyor 43. The protruding action of the detaching rod 29 is done by four air cylinders provided in the body 28. The sandwich pancake on the rope conveyor 43 is conveyed to the next conveyor. The process shown in Fig. 9(A) to Fig. 9(E) is repeated.

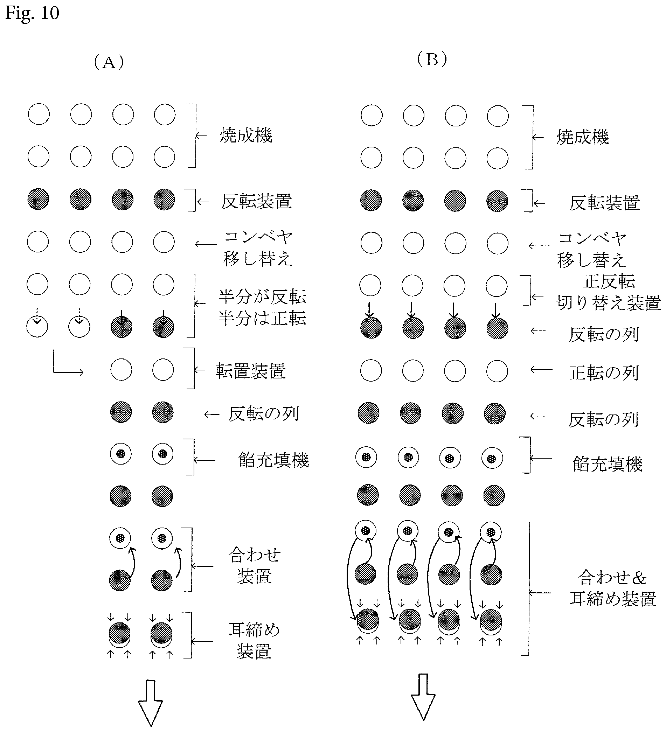

Fig. 10 shows the flow of baked pancakes in the filled-sandwich-pancake maker 100, where Fig. 10(A) shows the prior art, and Fig. 10(B) shows this invention. Because the normal-orientation/upside-down-orientation switching device 9 alternates, for each row, between normal orientation and upside-down orientation of the pancakes, the filled-sandwich-pancake maker 100 has considerably improved production capacity compared to the prior art, in which the number of baked pancakes in a row is less, as shown in Fig. 10(A).

### [Industrial applicability]

This invention is preferably used as a filled-sandwich-pancake maker having improved production capability.

### [List of Reference Numbers]

1 batter depositor
2 burner
3 oil-applying device
4 upper fire heater
5 flipping device
6 blower
8 downward-sloping conveyor
9 normal-orientation/upside-down-orientation switching device
12 bean-paste depositor
13 branding device
15 aligning/sealing device
16 wire
17 tray
18 wire stopper
19 handle
20 griddle plate
23, 24 arm
25 griddle-plates conveyor
26 servomotor
27 air-suction tube
28 body
29 separation rod
30 bean paste
31 back cover
32 handle
34 handle
34a browned surface (outer surface)
34b inner surface
35 wire scraper
43 rope conveyor
45 top die
45 bottom die
57 delivery conveyor
58 engaging piece
59 roller
80 baking device
90 finishing device
100 filled-sandwich-pancake maker

## Claims

1. A filled-sandwich-pancake maker comprising:
a baking device in which multiple griddle plates are linked to form a griddle-plate conveyor, and the griddle-plate conveyor orbits above and below a burner;
a batter depositor that deposits multiple dollops of pancake batter on the surfaces of a row griddle plates;
a flipping device that flips the pancakes so that the browned surface of the pancake faces up;
a blower that blows air from a nozzle to the surface of the griddle plate to release the baked pancake from the griddle plate, and that blows the released pancakes down onto a downward-sloping conveyor;
a normal-orientation/upside-down-orientation switching device that alternates, for each row, between a normal orientation in which the pancakes are conveyed with their browned surface facing down, and an upside-down orientation in which the pancakes are conveyed with their browned surface facing up;
a bean-paste depositor that deposits bean paste upon pancakes whose browned surface face down;
a branding device that applies a brand onto the pancakes; and
an aligning/sealing device that includes a suction function provided at a top die, and that (1) suctions and lifts pancakes whose browned surface faces up, (2) moves said pancakes in a circular arc, a (3) lays the pancakes on pancakes on which bean paste has been deposited, (4) sandwiches the pancakes between the top die and a bottom die, (5) presses the pancakes together, and (6) seals the peripheries of the two layered pancakes.

2. The filled-sandwich-pancake maker according to Claim 1, wherein the normal-orientation/upside-down-orientation switching device comprising multiple rollers provided at the output end of the downward-sloping conveyor, and when the rollers toss the baked pancakes in normal orientation, the rollers rotate at a first speed, and when the rollers flip the baked pancakes in upside-down orientation, the rollers rotate at a second speed that is slower than the first speed, to forwardly flip the baked pancakes.

3. The filled-sandwich-pancake maker according to Claim 1, wherein the baking device includes a wire scraper that consists of a wire that traverses the griddle plates conveyor and a tray, that removes baked pancakes that cannot be unstuck from the griddle plate by the blower, and hat then drops the released pancakes in the tray.

4. The filled-sandwich-pancake maker according to Claim 1, wherein the aligning/sealing device includes at its top die a detaching rod that protrudes downward from the top die.

## Amended claims

### Amended claims under Art. 19.1 PCT

1. A filled-sandwich-pancake maker comprising:
a baking device in which multiple griddle plates are linked to form a griddle-plate conveyor, and the griddle-plate conveyor orbits above and below a burner;
a batter depositor for depositing dollops of pancake batter on the surfaces of the griddle plates;
a flipping device that flips the pancakes such that the browned surface of the pancake faces up;
a blower that blows air from a nozzle to the surface of the griddle plate for releasing a baked pancake from the griddle plate, and that blows the released pancake down to a downward-sloping conveyor;
a normal-orientation/upside-down-orientation switching device that alternates, for each row, between a normal orientation in which the pancakes are conveyed with their browned surface facing down, and an upside-down orientation in which the pancakes are conveyed with their browned surface facing up;
a bean-paste depositor that deposits bean paste on pancakes whose browned surface faces down;
a branding device that applies a brand onto the pancakes; and
an aligning/sealing device that includes a top die that has a suction function that suctions and lifts pancakes whose browned surface faces up, moves said pancakes in a circular arc, lays those pancakes on pancakes on which bean paste has been deposited, sandwiches the pancakes between a top die and a bottom die, presses the layered pancakes together, and seals the peripheries of the two pancakes,
wherein the normal-orientation/upside-down-orientation switching device includes multiple rollers provided at the output end of the downward-sloping conveyor, and when the rollers toss the baked pancakes in a normal orientation, the rollers rotate at a first speed, and when the rollers flip the baked pancakes in an upside-down orientation, the rollers rotate at a second speed that is slower than the first speed, to forwardly flip the baked pancakes.

2. *[Deleted]*

3. The filled-sandwich-pancake maker according to Claim 1, wherein the baking device includes, for removing baked pancakes that cannot be unstuck from the griddle plate by the blower: (1) a wire scraper that consists of a wire traversing the griddle-plates conveyor and (2) a tray into which are put the released pancakes.

4. The filled-sandwich-pancake maker according to Claim 1, wherein the aligning/sealing device includes at the top die a detaching rod that protrudes downward from the top die.
